# EUROPÄISCHE PATENTSCHRIFT

(11) **EP 3 657 276 B1**
(45) Veröffentlichungstag und Bekanntmachung des Hinweises auf die Patenterteilung: **19.04.2023**
(21) Anmeldenummer: 19211418.9
(22) Anmeldetag: 26.11.2019
(51) Int. Cl.: G06F 8/54, G06F 8/75, G06F 9/451, G05B 19/042

(54) **VERFAHREN ZUM BETREIBEN EINES SYSTEMS UND SYSTEM**
SYSTEM AND METHOD FOR OPERATING A SYSTEM
PROCÉDÉ DE FONCTIONNEMENT D'UN SYSTÈME ET SYSTÈME

(30) Priorität: 26.11.2018 DE 102018220287
(43) Veröffentlichungstag der Anmeldung: 27.05.2020
(73) Patentinhaber: Lenze Automation GmbH, 31855 Aerzen (DE)
(72) Erfinder: Lange, André, 32609 Hüllhorst (DE); Stork, Detlef, 32423 Minden (DE); Hartmann, Elmar, 31855 Aerzen (DE); Hesse, Peter, 31789 Hameln (DE)
(74) Vertreter: Patentanwälte Ruff, Wilhelm, Beier, Dauster & Partner mbB

(56) Entgegenhaltungen:
- DE-A1-102006 056 021
- DE-A1-102010 040 054
- DE-A1-102015 108 243
- US-A1- 2004 039 728

## Beschreibung

Die Erfindung betrifft ein Verfahren zum Betreiben eines Systems und ein System.

Die DE 10 2006 056 021 A1 zeigt ein Entscheidersystem und ein Entscheidungsverfahren mit Analysefähigkeiten zum Steuern der Wechselwirkung von Komponenten mittels einer Vorrichtungslogik.

Die DE 10 2015 108 243 A1 zeigt ein Verfahren und eine Vorrichtung zur Konfiguration von Prozesssteuerungssystemen basierend auf generischen Prozesssystembibliotheken.

Die DE 10 2010 040 054 A1 zeigt ein Verfahren zum Sicherstellen der korrekten Funktionsweise einer Automatisierungsanlage.

Der Erfindung liegt die Aufgabe zugrunde, ein Verfahren zum Betreiben eines Systems und ein System zur Verfügung zu stellen, das zur Laufzeit des Systems automatisch Informationen betreffend das Wechselwirken von Komponenten des Systems zur Verfügung stellen kann.

Der Erfindung löst diese Aufgabe durch ein Verfahren zum Betreiben eines Systems nach Anspruch 1 und ein System nach Anspruch 6.

Das Verfahren dient zum Betreiben eines Systems, das eine Mehrzahl von miteinander wechselwirkenden Komponenten aufweist. Beispielsweise kann das System zwei bis mehrere hundert Komponenten gleichen oder unterschiedlichen Typs aufweisen.

Erfindungsgemäß werden Informationen betreffend das Wechselwirken einer jeweiligen Komponente mit den anderen Komponenten in der jeweiligen Komponente gespeichert.

Eine jeweilige Komponente weist einen Mikroprozessor und einen zugehörigen Programmspeicher zum Speichern eines Anwendungsprogramms auf, wobei die Komponente bzw. deren Mikroprozessor während des Betriebs das gespeicherte Anwendungsprogramm ausführt.

Die Informationen betreffend das Wechselwirken der Komponente mit den anderen Komponenten werden in dem Programmspeicher der Komponente gespeichert.

Die Informationen werden als Metadaten in einen Quelltext eingefügt, wobei aus dem Quelltext das jeweilige Anwendungsprogramm der Komponente erzeugt wird. Der Quelltext besteht hierbei beispielsweise aus einem Teil, der herkömmlich in einer der üblichen Programmiersprachen abgefasst ist. Die Metadaten werden beispielsweise als Kommentar in den Quelltext eingefügt, wobei beispielsweise bestimmte Zeichen bzw. Codes dazu verwendet werden können, den Anfang der Metadaten und das Ende der Metadaten zu kennzeichnen. Die Metadaten können beispielsweise in Textform vorliegen. Die Metadaten können strukturiert in dem Quelltext angeordnet sein. Die Metadaten können insbesondere keinen Niederschlag in einem durch den Mikroprozessor ausführbaren Programmcode finden. Der Quelltext kann beispielsweise IEC Code sein und die Metadaten können Makros sein.

Der Quelltext wird zur Erzeugung des Anwendungsprogramms kompiliert.

Der Quelltext wird zur Erzeugung des Anwendungsprogramms nach dem Kompilieren einer Link-Operation unterzogen.

Hinsichtlich der grundlegenden Funktionen von K(C)ompilern und Linkern sei auch auf die einschlägige Fachliteratur verwiesen.

Gemäß einer Ausführungsform weist das System weiter eine übergeordnete Komponente und ein Datenübertragungssystem auf, wobei die Komponenten und die übergeordnete Komponente zum Datenaustausch mittels des Datenübertragungssystems miteinander verbunden sind. Die übergeordnete Komponente kann beispielsweise eine SPS, ein Service-PC, ein Leitstand, ein Frequenzumrichter, usw. sein. Die übergeordnete Komponente ist dazu ausgebildet, die in den jeweiligen Komponenten gespeicherten Informationen auszulesen, die ausgelesenen Informationen auszuwerten und die ausgelesenen und ausgewerteten Informationen, insbesondere strukturiert, darzustellen.

Gemäß einer Ausführungsform beinhalten die Informationen: Abhängigkeiten zu anderen Komponenten, Verwandtschaftsbeziehungen zu anderen Komponenten, Wirkbeziehungen zu anderen Komponenten, Topologie-Informationen, und/oder Netzwerkkonfigurationen betreffend das Datenübertragungssystem. Hierzu können beispielsweise diese Informationen an zentraler Stelle in einer Datenbank hinterlegt sein, wobei beim Erstellen des Anwendungsprogramms einer Komponente dann auf diese hinterlegten Informationen zurückgegriffen wird. Beispielsweise kann eine Komponentenliste für alle im System vorhandenen Komponenten hinterlegt sein, die alle benötigten Informationen enthält.

Gemäß einer Ausführungsform ist die übergeordnete Komponente dazu ausgebildet, Betriebsdaten der jeweiligen Komponenten zu empfangen und die empfangenen Betriebsdaten in Abhängigkeit von den ausgelesenen Informationen der jeweiligen Komponenten auszuwerten und/oder darzustellen.

Gemäß einer Ausführungsform ist die übergeordnete Komponente dazu ausgebildet, eine Fehlerursache und/oder eine Fehlerquelle in Abhängigkeit von den ausgelesenen Informationen der jeweiligen Komponenten zu ermitteln, falls die Betriebsdaten einen Fehler anzeigen.

Das System weist eine Mehrzahl von miteinander wechselwirkenden Komponenten auf, wobei das System zur Durchführung des Verfahrens nach einem der vorhergehenden Ansprüche ausgebildet ist. Das System kann weiter beispielsweise eine Anzeigeeinheit mit einer grafischen Oberfläche aufweisen, auf der mittels des Verfahrens gewonnene Informationen strukturiert dargestellt werden.

Erfindungsgemäß kann über die Verwendung von Metadaten, beispielsweise in Form von Makros, im Anwenderprogramm die Möglichkeit geschaffen werden, beim Übersetzen des Programms Informationen über dieses Programm zu extrahieren. Mit diesen Informationen kann beispielsweise in einer übergeordneten Komponente dynamisch eine Oberfläche erzeugt werden, die die logischen Zusammenhänge des Programms bzw. dessen Wirkungsweise darstellt.

Über die Platzierung bzw. Ausgestaltung dieser Makros können auf diese Weise automatisch Informationen generiert werden, die es erlauben, anwenderorientiert Oberflächen aus Programmen zu erzeugen.

Diese Makros können bei Verwendung eines standardisierten Hierarchiemodells (z.B. Lenze FAST TA-Template) in dieses Modell eingepflegt werden so dass dieses Verfahren Bestandteil des Standards wird.

Mit Hilfe der so erzeugten Abhängigkeiten werden Zusammenhänge sichtbar, beispielsweise ob ein Ereignis die eigentliche Ursache eines Fehlers ist oder ob ein Ereignis eventuell nur die Folge (Folgefehler) eines vorhergehenden Ereignisses ist. Mit anderen Worten: Wird ein Fehler detektiert, kann die mögliche Ursache des Fehlers ermittelt werden. Der ermittelte Fehler kann dann über die generierte Oberfläche angezeigt werden. Auf der Oberfläche ist auch eine direkte Verlinkung zur Fehlerquelle möglich.

Das erfindungsgemäße Verfahren bietet zudem die Möglichkeit, Ereignisse aus unterlagerten Ebenen so abzuschirmen bzw. zu unterdrücken, dass diese entweder gar nicht zur Auswirkung kommen, oder dem Anwender in einer Form präsentiert werden, die auf seine Anlage bezogen sind. So kann beispielsweise eine Überstromwarnung bei einem Förderband z.B. in eine Meldung "Förderband zu voll" abgewandelt werden. Eine derartige Meldung ist dann beispielsweise für einen Maschinenbediener brauchbar. Es ist möglich, einen Fehler nur dann anzeigen zu lassen, wenn er für die aktuelle Funktionsfähigkeit der Maschine von Belang ist. Sollte eine Komponente in dem aktuellen Prozess nicht benötigt sein, kann die Fehlermeldung unterdrückt werden.

Beim Kompilieren werden automatisch Informationen erzeugt, die eine nachgeschaltete Einheit zur Darstellung von Oberflächen nutzen kann. Der Anwender kann komplett von der Oberflächenherstellung in der Einheit befreit werden.

Der Quelltext bzw. Programmcode, der auf unterschiedlichen Ebenen eines System-Hierarchiemodells (Modulsoftware, Gerätesoftware, Applikationssoftware) erzeugt wird, wird während seiner Programmierung mit Informationen versehen (beispielsweise Makros). Bei Verwendung von Funktionsbausteinen können diese bereits für den Benutzer/Kunden vorbereitet sein, sodass ein Konfigurieren von Schnittstellen der Funktionsbausteine ausreichend sein kann, um entsprechende Makros zu generieren. Beim Kompilieren bzw. Übersetzen des Programmcodes werden diese Informationen (Markos) extrahiert und zu einer die logischen Zusammenhänge des Programmflusses darstellenden Datenbasis zusammengefasst. Diese Datenbasis wird in einer übergeordneten Einheit zur Erzeugung von passenden Oberflächen genutzt. Neben den Makros werden geräteübergreifend beispielswiese auch Topologie-Informationen, beispielsweise Netzwerkkonfigurationen, in die gespeicherten Informationen mit einbezogen.

In verteilten Systemen gibt es oftmals die Aufgabe, Ereignisse systemweit geschlossen in einer Übersicht, beispielsweise in der übergeordneten Komponente an einer zentralen Stelle, darstellen zu können. Die Art und Weise, wie die im System enthaltenen/miteinander wechselwirkenden Komponenten zusammenarbeiten, ist dabei oftmals von Programmen abhängig, deren Änderungsdynamik hoch ist, insbesondere während ihrer Entwicklungsphase.

Das erfindungsgemäße Verfahren ermöglicht es, die Art und Weise des Zusammenwirkens, d.h. die Abhängigkeiten der Komponenten untereinander, automatisch während der Laufzeit der Komponenten zu ermitteln, so dass basierend darauf Informationen über das Zusammenwirken bestimmbar sind, die beispielsweise auf einer Nutzeroberfläche dargestellt werden können.

Dies entbindet einen Anwendungs-Programmierer davon, Programmänderungen, die sich auf das Zusammenwirken von Komponenten auswirken, manuell zu pflegen. Genauso bringt dieses erfindungsgemäße Verfahren die Möglichkeit mit sich, Oberflächen an Umkonfigurationen automatisch anpassen zu lassen.

Erfindungsgemäß werden beispielsweise in den Programmcode, z.B. IEC Code, einer jeweiligen Komponente Makros platziert, die beim Kompilieren des Programmcodes normierte Daten über das Zusammenwirken/Verwandtschaftsbeziehungen/Wirkketten generieren. Anhand dieser Daten können automatisch entsprechende Darstellungen abgeleitet werden, beispielsweise Visualisierungen, Diagnoseübersichten, usw.

Die aus den Komponenten ausgelesenen und ausgewerteten Informationen können insbesondere zu folgenden Zwecken ausgewertet werden:
- Übersichtliche hierarchische Darstellung des gesamten Systems.
- Signalisierung von Fehlerzuständen auf einzelnen Hierarchieebenen.
- "Aufklappen" einzelner Ebenen, so dass alle, der jeweiligen Ebene zugeordneten Komponenten sichtbar werden.
- Bereitstellung von Diagnoseinformationen auf jeder Ebene und zu jeder Komponente des Systems aus einer Oberfläche heraus.
- Die Komponenten können Komponenten unterschiedlicher Hersteller sein.
- Abbildung einer vollständigen Applikation in einer hierarchisch strukturierten Visualisierung/einem grafischen Dialog bzw. allgemein einer grafischen, interaktiven Anwenderschnittstelle.
- Der Systemstatus gibt hierarchisch gegliedert eine Übersicht über den Status der im System angemeldeten Komponenten wieder. Auf diese Weise kann ein Bediener schnell sehen, auf welcher Ebene (z.B. Firmware, Kommunikation, PLC-Projekt/Applikation) ein Problem aufgetreten ist. Dies wird ihm beispielsweise mittels eines entsprechenden Symbols angezeigt.
- Die Komponenten sind funktional zusammenhängend und in "Layern" (Kategorien) angeordnet.
- Eine Wirkkette ist in der Darstellung nachvollziehbar und sofort transparent.
- Die notwendigen Informationen zur Erzeugung einer Anwenderschnittstelle können automatisch generiert werden.

Die Erfindung wird nachfolgend unter Bezugnahme auf die Zeichnungen detailliert beschrieben. Hierbei zeigt hoch schematisch:
- Fig. 1: ein Blockschaltbild eines Systems mit mehreren Komponenten und einer übergeordneten Komponente,
- Fig. 2: einen Quelltext, der Informationen als Metadaten enthält, und
- Fig. 3: einen Auswertevorgang, bei dem aus Informationen, die aus den Komponenten des in Fig. 1 dargestellten Systems ausgelesen worden sind, ausgewertete Informationen erzeugt werden.

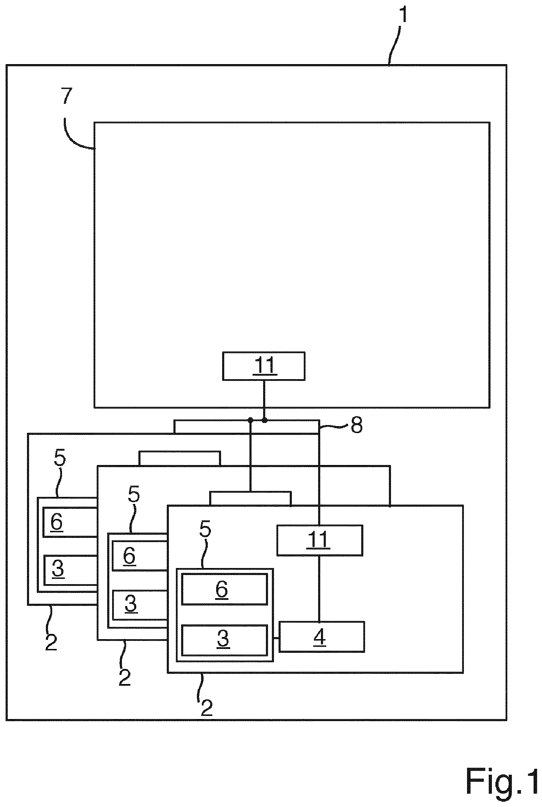

Fig. 1 zeigt ein Blockschaltbild eines elektrischen Antriebssystems 1.

Das Antriebssystem 1 weist eine Mehrzahl von miteinander wechselwirkenden Komponenten 2 auf. Die miteinander wechselwirkenden Komponenten 2 können beispielsweise Frequenzumrichter, Servo-Umrichter, speicherprogrammierbare Steuerungen, analoge und/oder digitale I/O-Komponenten, usw. sein.

Das Antriebssystem 1 weist weiter eine übergeordnete Komponente 7 auf, die beispielsweise ein Inbetriebnahme/Service-PC oder eine speicherprogrammierbare Steuerung sein kann.

Das Antriebssystem 1 weist weiter ein Datenübertragungssystem 8 auf, wobei die Komponenten 2 und die übergeordnete Komponente 7 zum Datenaustausch mittels des Datenübertragungssystems 8 miteinander verbunden sind. Bei dem Datenübertragungssystem 8 kann es sich beispielsweise um einen Feldbus handeln. Die Komponenten 2 und die übergeordnete Komponente 7 weisen beispielsweise jeweils herkömmliche Feldbustreiber 11 zum Datenaustausch über den Feldbus 8 auf.

Erfindungsgemäß werden Informationen 3 betreffend das Wechselwirken einer jeweiligen Komponente 2 mit den anderen Komponenten 2 in der jeweiligen Komponente 2 gespeichert.

Eine jeweilige Komponente 2 weist einen herkömmlichen Mikroprozessor 4 und einen zugehörigen nicht-flüchtigen Programmspeicher 5 zum Speichern eines Anwendungsprogramms 6 auf, wobei der Mikroprozessor 4 der jeweiligen Komponente 2 während seines Betriebs das gespeicherte Anwendungsprogramm 6 ausführt. Insoweit sei auch auf die einschlägige Fachliteratur verwiesen.

Die Informationen 3 betreffend das Wechselwirken einer jeweiligen Komponente 2 mit den anderen Komponenten 2 werden in einem hierfür vorgesehenen Speicherberiech des Programmspeichers 5 gespeichert.

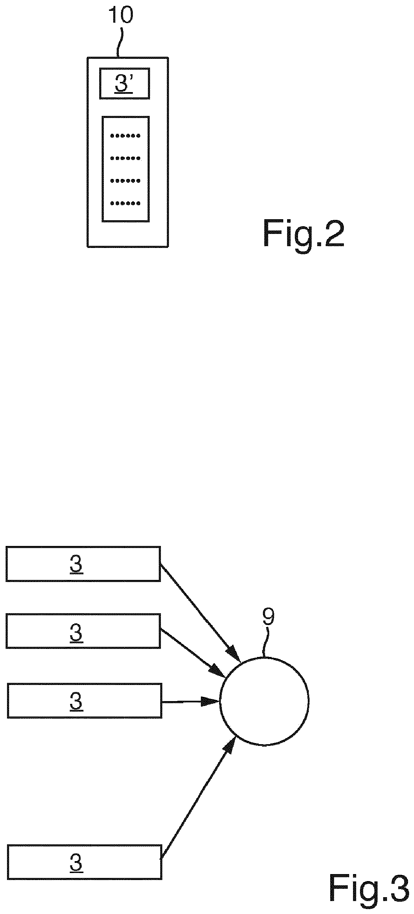

Bezugnehmend auf Fig. 2 werden die Informationen 3 als Metadaten 3' in einen Quelltext 10 eingefügt, wobei aus dem Quelltext 10 das jeweilige Anwendungsprogramm 6 der Komponente 2 erzeugt wird. Der Quelltext 10 wird zur Erzeugung des Anwendungsprogramms 6 kompiliert und nach dem Kompilieren einer Link-Operation unterzogen.

Bezugnehmend auf Fig. 3 ist die übergeordnete Komponente 7 dazu ausgebildet, die in den jeweiligen Komponenten 2 gespeicherten Informationen 3 auszulesen, die ausgelesenen Informationen 3 auszuwerten und die ausgelesenen und ausgewerteten Informationen 9 strukturiert darzustellen.

Die in den Komponenten 2 gespeicherten Informationen 3 beinhalten: Abhängigkeiten zu anderen Komponenten 2, und/oder Verwandtschaftsbeziehungen zu anderen Komponenten 2, und/oder Wirkbeziehungen zu anderen Komponenten 2, und/oder Topologie-Informationen des Datenübertragungssystems 8, und/oder Netzwerkkonfigurationen des Datenübertragungssystems 8.

Die übergeordnete Komponente 7 ist dazu ausgebildet, Betriebsdaten der jeweiligen Komponenten 2 zu empfangen und die empfangenen Betriebsdaten in Abhängigkeit von den ausgelesenen Informationen 3 der jeweiligen Komponenten auszuwerten, beispielsweise indem eine Fehlerursache und/oder eine Fehlerquelle in Abhängigkeit von den ausgelesenen Informationen 3 der jeweiligen Komponenten ermittelt wird/werden, falls die Betriebsdaten einen Fehler anzeigen.

## Patentansprüche

1. Verfahren zum Betreiben eines Systems (1), wobei das System (1) aufweist:
- eine Mehrzahl von miteinander wechselwirkenden Komponenten (2), wobei eine jeweilige Komponente (2) einen Mikroprozessor (4) und einen zugehörigen Programmspeicher (5) zum Speichern eines Anwendungsprogramms (6) aufweist, wobei der Mikroprozessor (4) der Komponente (2) während des Betriebs der Komponente (2) das gespeicherte Anwendungsprogramm (6) ausführt,
wobei das Verfahren die Schritte aufweist:
- Speichern von Informationen (3) betreffend das Wechselwirken einer jeweiligen Komponente (2) mit den anderen Komponenten (2) in der jeweiligen Komponente (2), wobei die Informationen (3) in dem Programmspeicher (5) gespeichert werden,
**dadurch gekennzeichnet, dass**
- die Informationen (3) als Metadaten (3') in einen Quelltext (10) eingefügt werden, wobei aus dem Quelltext (10) das jeweilige Anwendungsprogramm (6) der Komponente (2) erzeugt wird,
- der Quelltext (10) zur Erzeugung des Anwendungsprogramms (6) kompiliert wird, und
- der Quelltext (10) zur Erzeugung des Anwendungsprogramms (6) nach dem Kompilieren einer Link-Operation unterzogen wird.

2. Verfahren nach Anspruch 1, **dadurch gekennzeichnet, dass**
- das System (1) weiter aufweist:
- eine übergeordnete Komponente (7) und
- ein Datenübertragungssystem (8), wobei die Komponenten (2) und die übergeordnete Komponente (7) zum Datenaustausch mittels des Datenübertragungssystems (8) miteinander verbunden sind,
- wobei die übergeordnete Komponente (7) dazu ausgebildet ist, die in den jeweiligen Komponenten (2) gespeicherten Informationen (3) auszulesen, die ausgelesenen Informationen (3) auszuwerten und die ausgelesenen und ausgewerteten Informationen (9), insbesondere strukturiert, darzustellen.

3. Verfahren nach Anspruch 2, **dadurch gekennzeichnet, dass**
- die Informationen beinhalten:
- Abhängigkeiten zu anderen Komponenten (2),
- Verwandtschaftsbeziehungen zu anderen Komponenten (2),
- Wirkbeziehungen zu anderen Komponenten (2),
- Topologie-Informationen des Datenübertragungssystems (8), und/oder
- Netzwerkkonfigurationen betreffend das Datenübertragungssystem (8).

4. Verfahren nach Anspruch 2 und 3, **dadurch gekennzeichnet, dass**
- die übergeordnete Komponente (7) dazu ausgebildet ist, Betriebsdaten der jeweiligen Komponenten (2) zu empfangen und die empfangenen Betriebsdaten in Abhängigkeit von den ausgelesenen Informationen (3) der jeweiligen Komponenten auszuwerten.

5. Verfahren nach Anspruch 4, **dadurch gekennzeichnet, dass**
- die übergeordnete Komponente (7) dazu ausgebildet ist, eine Fehlerursache und/oder eine Fehlerquelle in Abhängigkeit von den ausgelesenen Informationen (3) der jeweiligen Komponenten zu ermitteln, falls die Betriebsdaten einen Fehler anzeigen.

6. System (1) aufweisend eine Mehrzahl von miteinander wechselwirkenden Komponenten (2), **dadurch gekennzeichnet, dass**
- das System zur Durchführung des Verfahrens nach einem der vorhergehenden Ansprüche ausgebildet ist.

## Claims

1. Method for operating a system (1), wherein the system (1) has:
- a plurality of components (2) which interact with one another, wherein a respective component (2) has a microprocessor (4) and an associated program memory (5) for storing an application program (6), wherein the microprocessor (4) of the component (2) executes the stored application program (6) during operation of the component (2),
wherein the method has the steps of:
- storing information (3) relating to the interaction of a respective component (2) with the other components (2) in the respective component (2), wherein the information (3) is stored in the program memory (5),
**characterized in that**
- the information (3) is inserted as metadata (3') into a source text (10), wherein the respective application program (6) of the component (2) is generated from the source text (10),
- the source text (10) is compiled for generating the application program (6), and
- the source text (10) is subjected to a link operation after compiling for generating the application program (6).

2. Method according to Claim 1, **characterized in that**
- the system (1) also has:
- a superordinate component (7) and
- a data transmission system (8), wherein the components (2) and the superordinate component (7) are connected to one another for the purpose of interchanging data by means of the data transmission system (8),
- wherein the superordinate component (7) is designed to read the information (3) stored in the respective components (2), to evaluate the information (3) which has been read and to display the information (9) which has been read and evaluated, in particular in a structured manner.

3. Method according to Claim 2, **characterized in that**
- the information comprises:
- dependencies with respect to other components (2),
- relationship links to other components (2),
- operative relationships with other components (2),
- topology information relating to the data transmission system (8), and/or
- network configurations relating to the data transmission system (8).

4. Method according to Claims 2 and 3, **characterized in that**
- the superordinate component (7) is designed to receive operating data relating to the respective components (2) and to evaluate the received operating data on the basis of the read information (3) relating to the respective components.

5. Method according to Claim 4, **characterized in that**
- the superordinate component (7) is designed to determine an error cause and/or an error source on the basis of the read information (3) relating to the respective components if the operating data indicate an error.

6. System (1) having a plurality of components (2) which interact with one another, **characterized in that**
- the system is designed to carry out the method according to one of the preceding claims.

## Revendications

1. Procédé pour faire fonctionner un système (1), le système (1) possédant :
- une pluralité de composants (2) qui interagissent entre eux, un composant (2) respectif possédant un microprocesseur (4) et une mémoire de programme (5) associée destinée à mémoriser un programme d'application (6), le microprocesseur (4) du composant (2) exécutant le programme d'application (6) mémorisé pendant le fonctionnement du composant (2),
le procédé comprenant les étapes suivantes :
- mémorisation d'informations (3) concernant l'interaction d'un composant (2) respectif avec les autres composants (2) dans le composant (2) respectif, les informations (3) étant mémorisées dans la mémoire de programme (5),
**caractérisé en ce que**
- les informations (3) sont insérées en tant que métadonnées (3') dans un texte source (10), le programme d'application (6) respectif du composant (2) étant généré à partir du texte source (10),
- le texte source (10) destiné à la génération du programme d'application (6) est compilé, et
- le texte source (10) destiné à la génération du programme d'application (6) est soumis à une opération de lien après la compilation.

2. Procédé selon la revendication 1, **caractérisé en ce que**
- le système (1) possède en outre :
- un composant de niveau supérieur (7) et
- un système de transmission de données (8), les composants (2) et le composant de niveau supérieur (7) étant connectés entre eux au moyen du système de transmission de données (8) pour l'échange de données,
- le composant de niveau supérieur (7) étant configuré pour lire les informations (3) mémorisées dans les composants (2) respectifs, interpréter les informations (3) lues et représenter, notamment de manière structurée, les informations lues et interprétées (9).

3. Procédé selon la revendication 2, **caractérisé en ce que**
- les informations contiennent :
- des dépendances aux autres composants (2),
- des relations de parenté avec les autres composants (2),
- des relations actives avec les autres composants (2),
- des informations de topologie du système de transmission de données (8), et/ou
- des configurations de réseau concernant le système de transmission de données (8).

4. Procédé selon la revendication 2 ou 3, **caractérisé en ce que**
- le composant de niveau supérieur (7) est configuré pour recevoir des données de fonctionnement des composants (2) respectifs et interpréter les données de fonctionnement reçues en fonction des informations (3) lues des composants (2) respectifs.

5. Procédé selon la revendication 4, **caractérisé en ce que**
- le composant de niveau supérieur (7) est configuré pour déterminer la cause d'erreur et/ou la source d'erreur en fonction des informations (3) lues des composants (2) respectifs, dans le cas où les données de fonctionnement indiquent une erreur.

6. Système (1) possédant une pluralité de composants (2) qui interagissent entre eux, **caractérisé en ce que**
- le système est configuré pour mettre en œuvre le procédé selon l'une des revendications précédentes.
